# EUROPÄISCHE PATENTANMELDUNG

(11) **EP 4 070 908 A1**
(43) Veröffentlichungstag der Anmeldung: **12.10.2022**
(21) Anmeldenummer: 21167745.5
(22) Anmeldetag: 09.04.2021
(51) Int. Cl.: B23K 26/0622, B23K 26/082, B23K 26/08, B23K 26/382, B23K 26/402, B23K 101/16, B23K 103/00

(54) **MIKROPERFORATIONSVERFAHREN UND -VORRICHTUNG MIT EINER SICH BEWEGENDEN BAHN**

(71) Anmelder: INTERLAS GmbH & Co. KG, 88444 Ummendorf (DE)
(72) Erfinder: Lang, Bernhard, 88444 Ummendorf (DE); Lang, Christian, 88444 Ummendorf (DE)
(74) Vertreter: Otten, Roth, Dobler & Partner mbB Patentanwälte

(57) **Zusammenfassung**

Diese Anmeldung betrifft ein Verfahren und eine Vorrichtung zur Herstellung einer Verpackung mit einem Verfahrensschritt zum Mikroperforieren eines flexiblen Materials als Verpackungsfolie (2), umfassend: Bereitstellen des flexiblen Materials als Verpackungsfolie (2), Transport (3) des flexiblen Materials (2) über eine Transportstrecke Bereitstellen eines Lasers (4), um mit dessen Strahl eine Perforation des flexiblen Materials (2) zu erzeugen. Für eine Verpackung mit verbessertem Gasaustausch wird für den Laser (4) ein Lasersystem der Wellenlänge im Bereich von 150 nm bis 1064 nm, vorzugsweise von 355 nm bis 532 nm verwendet, und das Perforieren mit dem Laser (4) wird während der Bewegung des flexiblen Materials der Verpackungsfolie (2) beim Transport durchgeführt.

## Beschreibung

Die Erfindung betrifft ein Verfahren zur Herstellung einer Verpackung unter Mikroperforation eines flexiblen Materials, vorzugsweise einer Verpackungsfolie, nach dem Oberbegriff des Anspruchs 1 sowie eine entsprechende Vorrichtung nach dem Oberbegriff des Anspruchs 11.

Aus dem Stand der Technik sind im Bereich des M.A.P. (Modified-Atmosphere Packaging) Verpackungen mit modifizierter Atmosphäre bekannt, um z.B. die Haltbarkeit eines verpackten Produkts zu erhöhen. Für einen Gasaustausch durch die Verpackungsfolie hindurch gibt es bereits Perforationslösungen mittels Laserstrahl.

Aufgabe der Erfindung ist es, ein Verfahren zur Herstellung einer Verpackung vorzuschlagen, das eine verbesserte Abstimmung des Gasaustauschs, gerade für sensible Produkte bieten kann.

Die Aufgabe wird, ausgehend von einem Verfahren der eingangs genannten Art, durch die kennzeichnenden Merkmale des Anspruchs 1 bzw. für eine entsprechende Vorrichtung durch die kennzeichnenden Merkmale des Anspruchs 11 gelöst.

Durch die in den abhängigen Ansprüchen genannten Maßnahmen sind vorteilhafte Ausführungen und Weiterbildungen der Erfindung möglich.

Das erfindungsgemäße Verfahren zur Herstellung einer Verpackung sieht eine Mikroperforation eines flexiblen Materials, vorzugsweise einer Verpackungsfolie, vor und eignet sich besonders für die Herstellung von Verpackungen besonders sensibler Produkte, gerade auch im Pharma- und Medizinbereich, aber auch von Lebensmitteln, gerade, wenn diese in einem speziellen Gas gelagert werden sollen.

Zunächst wird dabei ein flexibles Material, das insbesondere als Verpackungsfolie genutzt werden kann, verwendet und über eine Transportstrecke befördert. Zur Perforation wird ein Laser mit einem Lasersystem verwendet, wobei der Laserstrahl die Perforationslöcher in dem flexiblen Material erzeugt.

Die Perforation ermöglicht grundsätzlich einen Gasaustausch. Lebensmittel, die nach dem Verpacken gären bzw. ausgasen, wie zum Beispiel, Frischteig, geröstete Kaffeebohnen, Sauerkraut oder Milchprodukte benötigen sehr kleine Löcher, um die bei der Gärung oder Reifung entstehenden Gase wie zum Beispiel CO₂-Gas abzugeben. Eine gasdicht verschlossene Verpackung könnte sich sonst aufblähen und gegebenenfalls sogar reißen. Außerdem könnte sich eine gasdicht verschlossene Verpackung sonst auch bei Erwärmung sehr stark aufblähen. Zum Teil ist es, gerade bei verpackten Lebensmitteln mitunter sogar gewünscht, dass Luft bzw. Sauerstoff eindringt, damit die Produkte atmen können und nicht verderben oder auch nachreifen, solange der Gasaustauch in einem gewissen Maß gehalten werden kann.

Dementsprechend zeichnet sich das erfindungsgemäße Verfahren dadurch aus, dass der Laser in einem Wellenlängenbereich von 150nm bis 1064 nm, besonders bevorzugt 355 nm bis 532 nm verwendet wird. Erfindungsgemäß wird erkannt, dass eine kleinere Wellenlänge auch Auswirkungen auf den Lochdurchmesser bei der Perforation hat. In der Regel wird UV-Licht eingesetzt (typischerweise mit Wellenlängen ab 150 nm), um möglichst kleine Löcher zu erzeugen. Folgende Lasersysteme kommen unter anderem als Ausführungsbeispiele in Betracht:
- ein Excimer-Laser und/oder
- ein UV-Laser und/oder
- ein Nanosekundenlaser und/oder
- ein gütegeschalteter DPSS-Festkörperlaser
(DPSS: diode-pumped solid state laser).

Die besonders kleinen Perforationslöcher werden erfindungsgemäß während der Bewegung des flexiblen Materials bzw. der Verpackungsfolie beim Transport durchgeführt. Durch den verringerten Lochdurchmesser wird kann der Gasaustauch für die Anforderungen sensibler Produkte noch besser abgestimmt werden. Durch den kleineren Durchmesser wird der Gasaustausch zunächst für ein Perforationsloch überproportional reduziert. Um den Gasaustausch zu erhöhen, kann daher z.B. die Zahl der Perforationslöcher in der Verpackung erhöht werden. Die Anpassung des Gasaustauschs kann aber aufgrund der in der Größe reduzierten Perforationslöcher genauer gewählt und abgestimmt werden, da ein feineres Raster zur Verfügung steht, um die Gesamtfläche der Perforationslöcher auszuwählen, nach der sich der Gasaustausch bestimmt.

Die Herstellung der Verpackung wird dadurch verbessert, dass die Perforation während des Transports in die sich bewegende Bahn aus flexiblem Material bzw. in die Verpackungsfolie erfolgen kann, was auch einen deutlichen Zeitvorteil durch reduzierte Produktionszeiten mit sich bringt.

Grundsätzlich kann der Laser an einem bestimmten Punkt der Transportstrecke angeordnet sein und auf einen fixen Punkt gerichtet werden. Er wird dann angeschaltet, sobald das flexible Material durch die Transportvorrichtung in der Position ist, an der eines der Löcher erzeugt werden soll. Das Transportieren des flexiblen Materials erfolgt kontinuierlich. Die Löcher werden während der Bewegung mit dem Laser im Material erzeugt. Die Zeit, die zur Herstellung der Perforationen jeweils benötigt wird, ist sehr kurz und die Geschwindigkeit des Materials beim Transport zu langsam, als dass die Löcher dadurch verzerrt würden. Der Laserstrahl kann aber stattdessen auch mit der Bewegung des flexiblen Materials mitgeführt werden.

Um jedoch auch sehr schnelle oder komplexere Lochmuster in das flexible Material einbringen zu können, kann bei einer Ausführungsform eine Optik vorgesehen sein, welche über einen oder mehrere Galvanometer verstellbar ist, um den Laserstrahl an die gewünschte Position zu lenken. Diese Ausführungsform besitzt den Vorteil, dass vergleichsweise leichte Spiegel- oder Spiegelelemente sehr schnell verstellt werden können. In der Regel kann die Positionierung dann auch mit einer sehr hohen Geschwindigkeit erfolgen. Die Fokussierung des Laserstrahls auf das flexible Material erfolgt über eine einfache Linse, eine Fernfeldlinse oder ein optisches System, bei der eine Linse axial so verfahren wird, dass die Fokusebene während der Pulszeit mit der flexiblen Bahn mitgeführt wird.

Denkbar ist es grundsätzlich aber auch, den Laser als ganzes zu positionieren.

Die Optik kann beispielsweise einen beweglichen Spiegel und eine Fokussiereinrichtung umfassen. Der Laserstrahl kann in vorteilhafter Weise während eines oder mehrerer Pulse (Burst-Mode) mit dem bewegten flexiblen Material synchron mitgeführt werden. Hierdurch können besonders präzise Löcher gefertigt werden.

Um bei schnelleren Bewegungen hohe Beschleunigungen zu vermeiden, die zu Beschädigungen der Apparatur führen können und die in der Regel eher mit geringen Geschwindigkeiten bei der Positionierung des Laserstrahls verbunden sind, kann der Laser und/oder der Laserstrahl eine vorgegebene, vor allem eine glatte Bahnkurve durchfahren, auf der in zeitlichem und/oder örtlichem Abstand einzelne Perforationslöcher erzeugt werden.

Um Zeit bei der Produktion weiter einsparen zu können, kann der Laserstrahl z.B. mit einer diffraktiven Optik in zwei oder mehr Strahlen aufgeteilt werden, um gleichzeitig eine entsprechende Anzahl an Perforationslöchern im Material zu erzeugen.

Je nachdem, welches flexible Material perforiert werden soll und wie die Perforationslöcher beschaffen sein sollen, kann der Laser im Einzel- oder Mehrpulsbetrieb (Burst-Modus) betrieben werden. Unter anderem hängt davon auch der Energieeintrag in das Material ab.

Bei einer Weiterbildung der Erfindung werden Perforationslöcher von 1 µm bis weniger als 15 µm erzeugt, durch die eine besonders hohe Anpassungsfähigkeit des Gasaustauschs möglich ist. Insbesondere können Perforationslöcher mit Durchmesser von weniger als 50 µm erzeugt werden, vorzugsweise mit weniger als 25 µm.

Die Löcher können verschieden ausgebildet und angeordnet werden. Eine für die Produktion vorteilhafte Anordnung besteht in einer sich wiederholenden kreisförmigen Konfiguration, die eine einheitliche Abdeckung und einen gleichmäßigen Gasaustausch fördert.

Als Verpackungsmaterial, das perforiert werden soll, kommen insbesondere folgende flexible Materialien in Betracht:
- wenigstens zwei flexible Materialien als Verbund und/oder
- einer Monofolie und/oder ein zwei oder mehrlagiger Folienverbund
- einen Polymerfilm und/oder
- einen Polymerfilm mit Aluminiumschicht und/oder
- eine Papierbahn und/oder
- einen biologisch abbaubaren Film.

Denkbar ist die Verwendung eines Verbundmaterials. Ein biologisch abbaubarer Film kann biologisch, also durch Lebewesen oder deren Enzyme zersetzt zu werden.

### Ausführungsbeispiel

Ein Ausführungsbeispiel der Erfindung ist in der Zeichnung dargestellt und wird nachfolgend unter Angabe weiterer Einzelheiten und Vorteile näher erläutert. Im Einzelnen zeigt:

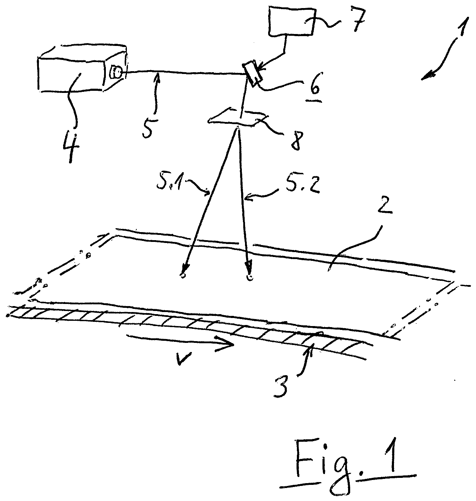

- Fig. 1:: eine Perforationsvorrichtung für ein Herstellungsverfahren einer Verpackung gem. der Erfindung.

Figur 1 zeigt eine Vorrichtung 1 zur Herstellung einer Verpackung unter Perforation der Verpackungsfolie 2 aus einem flexiblen Material. Die Folie 2 wird gleichförmig mit konstanter Geschwindigkeit v (in Figur 1 in Pfeilrichtung nach rechts) mit einer Transportvorrichtung 3 zur Führung der Folienbahn 2 bewegt. Ein Laser 4 (z.B. ein UV-laser mit der Wellenlänge von 355 nm) erzeugt Laserpulse. Der Laserstrahl 5 wird durch den verstellbaren Spiegel 6 abgelenkt, wobei die galvanometrische Positioniervorrichtung 7 den Spiegel 6 verstellt, um die gewünschten Position der aufgeteilten Laserstrahlen 5.1, 5.2 nach Passieren eines diffraktiven Elements 8 auf der Folie 2 einzustellen. Dort, wo die Teilstrahlen 5.1, 5.2 auf die Folie 2 auftreffen, werden jeweils die Perforationslöcher erzeugt. Der Laserstrahl 5 bzw. die Teilstrahlen 5.1, 5.2 können mit der Bewegung der Folie 2 synchron mitbewegt werden.

Allen Ausführungsbeispielen und Weiterbildungen der Erfindung ist gemeinsam, dass zur Herstellung einer Verpackung mit verbessertem Gasaustausch ein Lasersystem der Wellenlänge im Bereich von 150 nm bis 1064 nm, vorzugsweise von 355 nm bis 532 nm verwendet wird, und das Perforieren mit dem Laser während der Bewegung des flexiblen Materials der Verpackungsfolie beim Transport, insbesondere durch synchrone Mitführung des Laserstrahls bzw. von dessen Teilstrahlen durchgeführt wird.

### Bezugszeichen

- 1: Vorrichtung zur Herstellung einer Verpackung unter Perforation
- 2: Verpackungsfolie
- 3: Transportvorrichtung
- 4: Laser
- 5: Laserstrahl
- 5.1: Teilstrahl
- 5.2: Teilstrahl
- 6: Spiegel (verstellbar)
- 7: galvanometrische Positioniervorrichtung
- 8: diffraktive Optik
- v: Transportgeschwindigkeit

## Patentansprüche

1. Verfahren zur Herstellung einer Verpackung mit einem Verfahrensschritt zum Mikroperforieren eines flexiblen Materials als Verpackungsfolie (2), umfassend:
• Bereitstellen des flexiblen Materials als Verpackungsfolie (2),
• Transport (3) des flexiblen Materials (2) über eine Transportstrecke,
• Bereitstellen eines Lasers (4), um mit dessen Strahl (5, 5.1, 5.2) eine Perforation des flexiblen Materials (2) zu erzeugen,
• **dadurch gekennzeichnet, dass** für den Laser (4) ein Lasersystem der Wellenlänge im Bereich von 150 nm bis 1064 nm, vorzugsweise von 355 nm bis 532 nm verwendet wird, wobei insbesondere als Lasersystem:
i. ein Excimer-Laser und/oder
ii. ein UV-Laser und/oder
iii. ein Nanosekundenlaser und/oder
iv. ein gütegeschalteter DPSS-Festkörperlaser verwendet wird und
• das Perforieren mit dem Laser (4) während der Bewegung des flexiblen Materials der Verpackungsfolie (2) beim Transport durchgeführt wird.

2. Verfahren nach einem der vorgenannten Ansprüche, **dadurch gekennzeichnet, dass** zur Perforation eine Optik (6, 7, 8) zum Positionieren des Laserstrahls (5, 5.1, 5.2) verwendet wird und/oder der Laserstrahl durch Verschwenken und/oder Translation des Lasers zur Perforation positioniert wird.

3. Verfahren nach einem der vorgenannten Ansprüche, **dadurch gekennzeichnet, dass** der Laserstrahl (5) und/oder vom Laserstrahl (5) aufgespaltete Teilstrahlen (5.1, 5.2) des Lasers (4) mit der Bewegung der flexiblen Bahn, wenigstens abschnittsweise, synchron mitgeführt wird/werden, wobei insbesondere der Laserstrahl (5, 5.1, 5.2) des Lasers (4) über einen beweglichen Spiegel (6) und einer Fokussiereinrichtung positioniert und/oder verfahren wird.

4. Verfahren nach einem der vorgenannten Ansprüche, **dadurch gekennzeichnet, dass** der Laser (4) und/oder der Laserstrahl (5, 5.1, 5.2) eine Bahnkurve durchfährt, auf der in zeitlichem und/oder örtlichem Abstand einzelne Perforationslöcher erzeugt werden, wobei insbesondere sich der Laserstrahl (5, 5.1, 5.2) mit einer Bahngeschwindigkeit auf der Verpackungsfolie von mindestens 30 m / min. bewegt.

5. Verfahren nach einem der vorgenannten Ansprüche, **dadurch gekennzeichnet, dass** der Laser im Einzelpulsbetrieb betrieben wird.

6. Verfahren nach einem der vorgenannten Ansprüche, **dadurch gekennzeichnet, dass** der Laser (4) im Mehrpulsverfahren, dem sogenannten Burst-Modus betrieben wird.

7. Verfahren nach einem der vorgenannten Ansprüche, **dadurch gekennzeichnet, dass** der Laser (4) Perforationslöcher im Durchmesserbereich zwischen µm und 50pm, insbesondere µm und 25µm, besonders bevorzugt zwischen 1 µm und 15µm erzeugt.

8. Verfahren nach einem der vorgenannten Ansprüche, **dadurch gekennzeichnet, dass** die Löcher als Löcher einer sich wiederholenden kreisförmigen Konfiguration erzeugt werden.

9. Verfahren nach einem der vorgenannten Ansprüche, **dadurch gekennzeichnet, dass** ein flexibles Material, vorzugsweise eine Verpackungsfolie (2) verwendet wird, welche umfasst:
• ein weiteres flexibles Material und/oder
• einer Monofolie und/oder einem zwei oder mehrlagigen Folienverbund
• einen Polymerfilm und/oder
• einen Polymerfilm mit Aluminiumschicht und/oder
• eine Papierbahn und/oder
• einen biologisch abbaubaren Film.

10. Verfahren nach einem der vorgenannten Ansprüche, **dadurch gekennzeichnet, dass** eine diffraktive Optik (8) verwendet wird, um wenigstens zwei Löcher gleichzeitig bei der Perforation zu erzeugen.

11. Vorrichtung (1) zur Herstellung einer Verpackung mittels Mikroperforieren eines flexiblen Materials als Verpackungsfolie (2) und zur Durchführung des Verfahrens nach einem der vorhergehenden Ansprüche, umfassend eine Transportvorrichtung (3) zum Transport des flexiblen Materials (2), **dadurch gekennzeichnet, dass**
• ein Laser (4) mit einem Lasersystem der Wellenlänge im Bereich von 150 nm bis 1064 nm, vorzugsweise von 355 nm bis 532 nm, zur Perforation des flexiblen Materials, wobei insbesondere das Lasersystem:
i. einen Excimer-Laser und/oder
ii. einen UV-Laser und/oder
iii. einen Nanosekundenlaser und/oder
iv. einen gütegeschalteter DPSS-Festkörperlaser umfasst, und
• eine Positioniervorrichtung (6, 7, 8) zur Positionierung des Laserstrahls (5, 5.1, 5.2) auf dem bewegten flexiblen Material (2) während des Transports vorgesehen sind.

12. Vorrichtung (1) nach Anspruch 11, **dadurch gekennzeichnet, dass** die Positioniervorrichtung (6, 7, 8) eine Optik zum Positionieren des Laserstrahls aufweist, die insbesondere:
• einen beweglichen Spiegel (6) und einer Fokussiereinrichtung und/oder
• eine diffraktive Optik (8), um wenigstens zwei Löcher gleichzeitig bei der Perforation zu erzeugen, aufweist.

13. Vorrichtung (1) nach einem der Ansprüche 11 bis 12, **dadurch gekennzeichnet, dass** die Positioniervorrichtung (6, 7, 8) dazu ausgebildet ist, den Laserstrahl (5, 5.1, 5.2) des Lasers mit dem bewegten flexiblen Material (2) während des Transports (3) mitzuführen.

14. Vorrichtung (1) nach einem der Ansprüche 11 bis 13, **dadurch gekennzeichnet, dass** der Laser (4) dazu ausgebildet ist, im Einzelpulsbetrieb oder im Mehrpulsverfahren (Burst-Modus) betrieben zu werden.
